# EUROPÄISCHE PATENTSCHRIFT

(11) **EP 1 129 882 B1**
(45) Veröffentlichungstag und Bekanntmachung des Hinweises auf die Patenterteilung: **24.05.2006**
(21) Anmeldenummer: 01105082.0
(22) Anmeldetag: 02.03.2001
(51) Int. Cl.: B60K 15/05, F16J 15/06, B60R 16/06

(54) **Dichtungsring für Klappen zum Abdecken des Tankstutzen bei Kraftfahrzeugen**
Sealing ring for fuel inlet covers of motor vehicles
Bague d'étanchéité pour trappes d'obturation d'une canalisation de remplissage d'un véhicule automobile

(30) Priorität: 04.03.2000 DE 10010121
(43) Veröffentlichungstag der Anmeldung: 05.09.2001
(73) Patentinhaber: Mittelhäuser, Bernhard, D-30900 Wedemark (DE)
(72) Erfinder: Mittelhäuser, Bernhard, 30900 Wedemark (DE); Schubert, Jan, 30900 Wedemark (DE)
(74) Vertreter: Rehmann, Thorsten

(56) Entgegenhaltungen:
- EP-A- 0 914 984
- DE-A- 4 128 845
- DE-A- 4 327 930
- US-A- 3 913 924

## Beschreibung

Die Erfindung bezieht sich auf einen Dichtungsring aus Gummi oder gummiähnlichen Kunststoffen für Klappen zum Abdecken des Tankstutzens bei Kraftfahrzeugen, wobei des Dichtungsring einen zähharten Fass aufweist, welcher is einer Umfangs mit gehalten werden kann, wobei der Fass mit einer gegenüber dem eigestlichen Dichtungsring höheren Härte zähhart gestaltet ist.

Derartige Dichtungsringe können ausreichend sicher in einer am äusseren Klappenumfang befindlichen Ringnut gehalten werden, ohne eine Klebbefestigung vornehmen zu müssen. Diese Ringe haben allerdings den Nachteil, dass die Dehnfähigkeit des zähharten Fusses beschränkt ist. Eine vergleichsweise gute Dehnfähigkei muss jedoch vorausgesetzt werden, wenn die Dichtungsringe bei ihrer Montage über die die Ringnut begrenzenden Wülste des Klappenkörpers gekrempelt werden, will man nicht ein Zerreissen der Dichtungsringe inkaufnehmen.

Aus der gattungsgemäβen EP 914 984 A2 ist eine Klappe zum Abdecken des Tankstutzens bei Kraftfahrzeugen bekannt, wobei die Klappe eine in einer am äußeren Umfang befindlichen Nut angeordnete, ringförmige, elastische Dichtung zum Abdichten des Spaltes zwischen dem Klappenrand und der Außenhaut des Fahrzeuges aufweist. Zumindest ein Teil, z. B. der Fuß des der Nut zugekehrten Querschnittes des Dichtungskörpers besteht aus einem gegenüber dem eigentlichen, vorzugsweise etwa lippenartigen Dichtungselement aus einem wesentlich härter eingestellten Elastomer.

Die Erfindung geht von der Erkenntnis aus, dass im Vergleich zur Dehnfähigkeit eine bessere Biegetauglichkeit des zähharten Fusses gegeben ist und eine sichere Montage der Dichtungsringe dann weitgehend gewährleistet werden kann, wenn die Dichtungsringe bei ihrer Montage zumindest im wesentlichen eine Biegeverformung erfahren.

Demgemäss liegt der Erfindung die Aufgabe zugrunde, die eingangs erwähnten Dichtungsringe so auszubilden, dass sie bei der vorgenannten Montagekrempelbewegung weitgehend auf Biegung verformt und nicht vorwiegend auf Dehnung beansprucht werden

Zur Lösung diese Aufgabe ist der zäkhark Fass des Dichtungsringes erfindungsgemäss an seinem in die Umfangsnut einzubringenden Rand mit mehreren, über den Ringumfang verteilt angeordneten randoffenen Ausnehmungen versehen, die zweckmässigerweise gleichmässig über den Ringumfang zu verteilen sind. Mit Vorteil wird die Gestalt der Ausnehmungen so gewählt, dass der innere Dichtungsringes eine zumindest im wesentlichen wellenförmige Gestalt erhält, wobei dann in etwa ein polygonartiger Verlauf des Dichtungsringes bzw. seiner Innenkante erreicht wird, wenn der Dichtungskörper von seiner anfänglich runden Gestalt aus verformt wird.

Diese Querschnittsbemessung des zähharten Fusses stellt einerseits aufgrund der zwischen den Ausnehmungen bestehenden Vorsprünge einen ausreichend sicheren Formschluss durch Eingriff in die Umfangsnut sicher, andererseits bilden die Ausbuchtungen gewissermassen Sollbiegestellen bei der Montagekrempelverformung des Dichtungsringes. Es hat sich gezeigt, dass die Dichtungsringe nunmehr sicherer montierbar sind, ohne ein Zerreissen der Dichtungsringe befürchten zu müssen.

Weitere Einzelheiten der Erfindung werden anhand der Zeichnung erläutert, in der ein Ausführungsbeispiel der Erfindung dargestellt ist. Es zeigen :

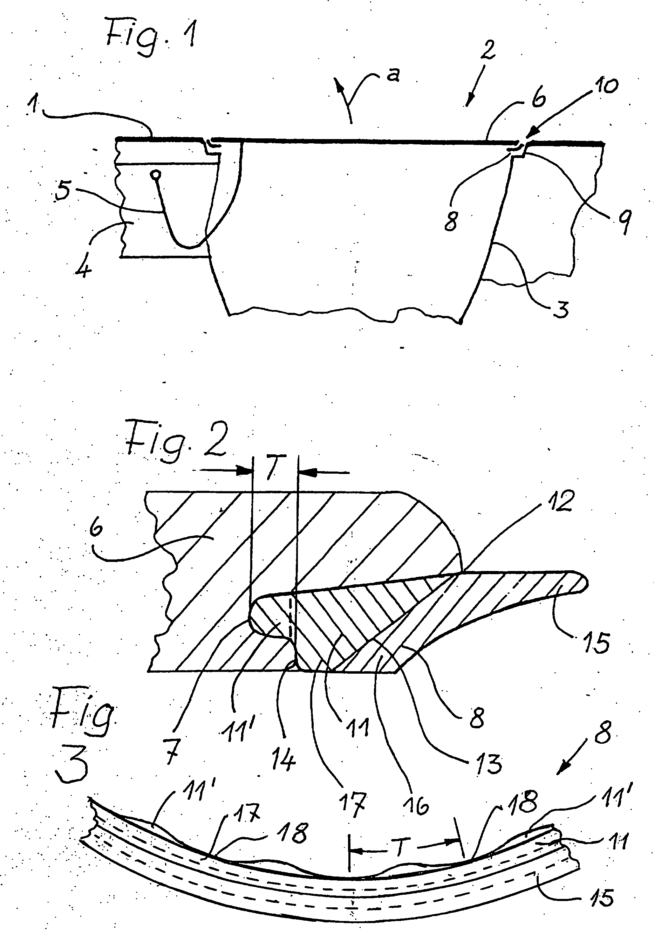

Fig. 1 in schematischer Darstellung einen Teilschnitt durch die Aussenhaut eines Strassenfahrzeuges im Bereich des napfartigen Behälters zur-Aufnahme des Tankstutzens, wobei dieser Behälter durch eine etwa runde Tankklappe verschliessbar ist,
Fig. 2 einen Schnitt durch den Rand der Tankklappe gemäss Fig. 1 und
Fig. 3 den die Tankklappe gemäss Fig. 2 umschliessenden Dichtungsring in der Teilansicht von unten.

In der Aussenhaut 1 des Fahrzeuges befindet sich eine Aussparung 2 zur Aufnahme eines unten zum Durchtritt des Tankstutzens ausgebildeten Behälters 3. Dieser hat eine seitliche Ausnehmung 4 zur schwenkbaren Zapfenlagerung eines Schwenkarmes 5, an dem die Tankklappe 6 befestigt ist. Eine Verschwenkung der Tankklappe 6 kann somit in Richtung des Pfeiles a erfolgen.

Eine am äusseren Rand der Tankklappe 6 befindliche Umfangsnut 7 dient zur Aufnahme eines Dichtungsringes 8, der seitlich aussen an einer Stufe 9 des Behälters 3 dichtend anliegt. Der Spalt bei 10 wird somit abgedichtet.

Um den Dichtungsring 8 unter Verzicht auf Klebemittel in seiner Umfangsnut 7 sicher halten zu können, ist ein besonderer Aufbau des Dichtungringes 8 vorgesehen. Der Fuss 11 des Dichtungsringes 8 füllt mit einem radial innen liegenden Abschnitt 11' die Umfangsnut 7 aus und erstreckt sich im übrigen bis zur äusseren Kante 12 der Tankklappe 6 und von dort nahe bis an den unten gelegenen Rand 14 der Umfangsnut 7. Der-fest mit dem Fuss 11 verbundene zungenartige, ringförmige Vorsprung 15 als aussen gelegener , weicher Querschnittsbereich erstreckt sich aufgrund der konischen Fläche 13 bis in die Nähe des Randes 14 unterhalb des äusseren Randes der Tankklappe 6

Eine solche Querschnittsgestaltung des Vorsprunges 15 ermöglicht eine elastische Verformung durch Abbiegen, während der nach unten geführte Querschnittsbereich bei 16 eine elastische Auflage senkrecht zur Klappenebene sicherstellt.

Da die Umfangsnut 7 eine Hinterschneidung bildet, muss zur Montage bzw. Krempeln des Dichtungsringes 8 dieser erheblich verformt werden. Um eine solche Verformbarkeit ohne Beschädigung des Dichtungsringes 8 zu erzielen, sind am inneren Umfang des Fusses 11 zwischen den in die Umfangsnut 7 hineinragenden Abschnitten 11' Ausnehmungen 18 vorgesehen, und zwar in der Weise, dass sich Teilungen T (gemäss Fig. 3 von einer Sohle einer Ausnehmung 18 bis zur benachbarten Sohle gemessen) von etwa 20 - 40 mm ergeben. Bei Tankklappendurchmessern von etwa 15 cm sind somit etwa zwanzig Abschnitte 11' vorhanden, die einen ausreichend sicheren Formschluss zur Halterung des Dichtungsringes 8 gewährleisten, obwohl sich zwischen den Abschnitten 11' Ausnehmungen 18 befinden, in deren Bereich kein bzw. praktisch kein Formschluss entstehen kann.

Es ist aus Festigkeitsgründen zweckmässig, wenn die Ausnehmungen 18 und die Abschnitte 11' von einer Wellenlinie z.B. einer flachen Sinus-Kurve begrenzet sind.

Es versteht sich, dass die zwischen den vorspringenden Abschnitten 11' befindlichen Ausnehmungen 18 Sollbiegestellen entstehen lassen und zudem eine Überführung des Fusses 11 in die Umfangsnut 7 erheblich erleichtern. Dies ist besonders dann der Fall, wenn die (radiale) Tiefe der Ausnehmungen 18 der (radialen) Tiefe T der Umfangsnut 7 (gemessen vom Rand 14 aus) zumindest im wesentlichen entspricht.

Der Dichtungsring 8 ist als einstückiger, einheitlicher Formkörper aus Elastomer bzw. Gummi und/oder gummiähnlichen Stoffen gefertigt. Der Fuss ist zähhart gestaltet bei einer Shore-Härte A von etwa 70 - 90. Der angehaftete Vorsprung 15 mit dem Querschnittsbereich 16 ist hingegen weich elastisch ausgeführt, und zwar mit einer um etwa 15 - 30 Shore-Härte A geringeren Härte.

## Patentansprüche

1. Dichtungsring aus Gummi oder gummiähnlichen Kunststoffen für Klappen zum Abdecken des Tankstutzens von Kraftfahrzeugen wobei der Dichtungsring einen zähharten Fass aufweist, welcher in einer Umfangsnut (7) gehalten werden kann, wobei der Fass mit einer gegenüber dem eigentlichen Dichtungsring höheren Härte zähhart gestaltet ist, **dadurch gekennzeichnet, dass** der zähharte Fuss des Dichtungsringes (8) an seinem in die Umfangsnut (7) einzubringenden. Rand mit mehreren, über seinen Umfang verteilt angeordneten randoffenen Ausnehmungen (18) versehen ist.

2. Dichtungsring nach Anspruch 1, **dadurch gekennzeichnet, dass** die Ausnehmungen (18) gleichmässig über den Umfang des Dichtungsringes (8) verteilt angeordnet sind.

3. Dichtungsring nach Anspruch 1, **dadurch gekennzeichnet, dass** die Ausnehmungen (18) und die zwischen ihnen befindlichen Abschnitte (11') radial innen von einer Wellenlinie z.B. von einer flachen Sinus-Liniebegrenzt sind.

4. Dichtungsring nach Anspruch 1, **dadurch gekennzeichnet, dass** die radiale Tiefe der Ausnehmungen (18) zumindest in etwa der radialen Tiefe (T) der Umfangsnut (7) entspricht.

5. Dichtungsring nach Anspruch 2 und 3, **dadurch gekennzeichnet, dass** die Teilung (T) der Wellenlinie etwa 20 - 40 mm beträgt.

6. Dichtungsring nach Anspruch 1, **dadurch gekennzeichnet, dass** die zwischen den Ausnehmungen (18) befindlichen, in die Umfangsnut (7) eingreifenden Abschnitte (11') des Fusses (11) zumindest vorwiegend die Halterung des Dichtungsringes bewirken.

7. Tankklappe zum Abdecken des Tankstutzens bei Kraftfahrzeugen mit einem mit seinem zähharten Fuss in einer Umfangsnut (7) der Tankklappe angeordneten Dichtungsring (8) mit den Merkmalen nach einem oder mehreren vorhergehenden Ansprüchen.

## Claims

1. Sealing ring made of rubber or rubber-like plastics for flaps for covering the tank filler neck of motor vehicles, the sealing ring having a hard and tough foot, which can be held in a circumferential groove (7), the foot being made hard and tough with a hardness that is greater than that of the actual sealing ring, **characterized in that** the hard and tough foot of the sealing ring (8) is provided on its edge that is to be inserted into the circumferential groove (7) with a number of recesses (18), which are open at the edge and distributed over its circumference.

2. Sealing ring according to Claim 1, **characterized in that** the recesses (18) are evenly distributed over the circumference of the sealing ring (8).

3. Sealing ring according to Claim 1, **characterized in that** the recesses (18) and the portions (11') located between them are bounded radially on the inside by an undulating line, for example a flat sinusoidal line.

4. Sealing ring according to Claim 1, **characterized in that** the radial depth of the recesses (18) corresponds at least approximately to the radial depth (T) of the circumferential groove (7).

5. Sealing ring according to Claims 2 and 3, **characterized in that** the pitch (T) of the undulating line is approximately 20 - 40 mm.

6. Sealing ring according to Claim 1, **characterized in that** the portions (11') of the foot (11) that are located between the recesses (18) and engage in the circumferential groove (7) at least predominantly bring about the securement of the sealing ring.

7. Tank flap for covering the tank filler neck of motor vehicles, with a sealing ring (8) having the features according to one or more of the preceding claims arranged with its hard and tough foot in a circumferential groove (7) of the tank flap.

## Revendications

1. Bague d'étanchéité en caoutchouc ou matière synthétique analogue au caoutchouc pour trappes d'obturation de l'embout du réservoir d'un véhicule automobile, dans lequel la bague d'étanchéité comporte un pied dur qui peut être maintenu dans une rainure périphérique (7), dans lequel le pied est formé de façon à avoir une dureté plus grande que celle propre à la bague d'étanchéité, **caractérisée en ce que** le pied dur de la bague d'étanchéité (8) présente sur son bord destiné à être placé dans les rainures périphérique (7) plusieurs évidements (18) à bord ouvert répartis sur sa périphérie.

2. Bague d'étanchéité selon la revendication 1, **caractérisée en ce que** les évidements (18) sont répartis régulièrement sur la périphérie de la bague d'étanchéité (8).

3. Bague d'étanchéité selon la revendication 1, **caractérisée en ce que** les évidements (18) et les sections (11') situées entre ceux-ci sont limitées radialement vers l'intérieur par une ligne ondulée par exemple une ligne sinusoïdale aplatie.

4. Bague d'étanchéité selon la revendication 1, **caractérisée en ce que** la profondeur radiale des évidements (18) est au moins égale à la profondeur radiale (T) de la rainure périphérique (7).

5. Bague d'étanchéité selon la revendication 2 et 3, **caractérisée en ce que** la partition (T) de la ligne ondulée est de l'ordre de 20-40 mm.

6. Bague d'étanchéité selon la revendication 1, **caractérisée en ce que** les sections (11'), situées entre les évidements (18) et engagées dans la rainure périphérique (7), assurent au moins principalement le maintien de la bague d'étanchéité.

7. Trappe de réservoir pour obturer l'embout du réservoir dans des véhicules automobiles comprenant une bague d'étanchéité (8) dont le pied dur est disposé dans une rainure périphérique (7) de la trappe de réservoir, ayant les caractéristiques de l'une ou plusieurs des revendications précédentes.
